# EUROPEAN PATENT APPLICATION

(11) **EP 2 284 649 A1**
(43) Date of publication of application: **16.02.2011**
(21) Application number: 07855781.6
(22) Date of filing: 25.12.2007
(51) Int. Cl.: G06F 1/16

(54) **A NETWORK POWER SOURCE DISTRIBUTING DEVICE**

(71) Applicant: Chang, Herling, Taiwan (CN)
(72) Inventor: Chang, Herling, Taiwan (CN)
(74) Representative: Altenburg, Bernardus Stephanus Franciscus
(86) International application number: PCT/CN2007/003775
(87) International publication number: WO 2009/079863

(57) **Abstract**

The present invention is related to a network type power distribution device, which is comprised by a single layer structure, wherein micro-controller and software control power management and network communication. The present invention comprises a set of program memory, a set of data memory, a micro-controller, a data buffer zone, a control input/output module, an analog-digital converter, a transceiver and an Ethernet port. The present invention is a single layer structure, which uses a micro-controller to process network information and electricity information directly. Accordingly, it does not need serial communication connection in the interior to solve the problems of waiting time in information transformation and network brand width waste.

## Description

### FIELD OF THE INVENTION

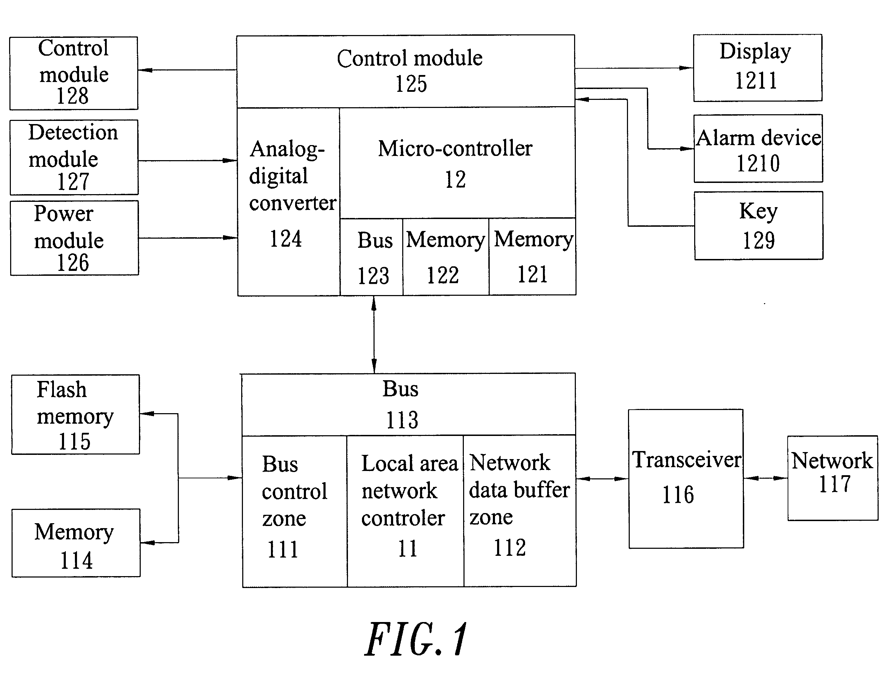

Conventional network type power distribution device is made up of network processor and micro-controller, which comprised by two layers structure and an embedded operation system and software codes. Referring to FIG 1, Micro-controller (12) with its software codes controls various modules such as control module (128, 125), detective module (127), power module (126), display (1211), alarm device (1210), keyboard (129) and analog-digital converter (124). Micro-controller (12) and its software and related circuit work as input and output, power detection, overload protection, relay control, transmission signal to each interior power module and sensor module or relay module. Network processor (11) and its software and related circuit including dynamic access memory (114), flash memory (115) bus control module (111), bus (123, 113) and transceiver (116) work as transmitting information to the network and converting information communicated in the form of TCP/IP data packets into information that micro-controller (12) can use. Conventional network type power distribution device is a two layers structure, wherein the first layer is a network processor which is connected to network LAN or WAN via network protocol of MIB, TCPIP, HTTP, UDPIP etc network communication packets and the second layer is a micro-controller (12). The two layers are communicated via UART, RS232, RS485, I2C, SPI, MODBUS or CANBUS etc serial communication. Network processor (11) processes network information and micro-controller (12) processes power information. Each of the two processors has different program and memory respectively to process different information respectively. Both are communicated via serial communication.

### BACKGROUND OF THE INVENTION

The U.S. patent number 6507273 of DigiPower Company (Taipei, Taiwan) uses a network processor and its related circuit and software to transmit, receive, process and transform network information packets into information that can be utilized by micro-controller. Micro-controller controls power relay module and connects to network processor via serial communication to achieve the function of controlling power output socket switch remotely. The U.S. patent number 7171461, 7043543 of Servertech Company (California, USA) introduce a vertical network remote electricity management socket device which comprises a plurality of independently controllable power output sockets. The power input is at one end of the device and power is distributed to each output socket. Each power module is serially connected to micro-controller via I2C bus and micro-controller controls the relay of the power module via default address. A network processor and its related circuit and an embedded operation system process network data, state and control the signal among external network and internal I2C bus and converts the information micro-controller can use. The U.S. patent number 7171461 is characterized by utilizing a micro-controller to process power control, and a network processor and its related circuit and an embedded operation system to process network signal and transform data into information which can be used by micro-controller, wherein the micro-controller and the network processor are connected by I2C serial connection to achieve the function of managing each power output socket of power distribution device remotely. The U.S. patent number 7043543 introduces an electrical socket device remotely managed by network, wherein it comprises a long body and a plurality of independently controllable power output sockets. At one end of the device it connects to the power input and power is distributed to each power output socket. The said invention utilizes a micro-controller to process power control. And a network processor processes network signal and transform data into information that can be utilized by micro-controller. The micro-controller and network processor are connected by I2C serial communication to achieve the function of remotely managing each power output socket of the power distribution device. Other Severtech's patents such as U.S. patent number 704354318 utilizes a micro-processor to process power control and a network processor to process network signal and transform data into information which can be utilized by micro-controller. The micro-controller and network processor are connected by I2C serial communication to achieve the function of remotely managing each power output socket of the power distribution device.

Conventional network type power distribution device structure has two layers communications that are network communication and serial communication. Two layers communications achieve the function of remotely controlling or managing each power output socket of power distribution device. Network communication bandwidth is generally several times faster than serial communication and results in network processor often waits the micro-controller electricity information transmitted via serial communication. It leads to a waste of network bandwidth and unbalanced processing load for both micro-controller and network processor. In fact it is caused by the different communication bandwidth and inconsistency in transformation between two layers of the two layers structure. In addition, different programs and different processors process the electricity information and network information in conventional structure. Display, sensor module, power module and relay module and micro-controller processing electricity information are connected directly and transmitted to network processor via serial communication and then to network. Because display is merely directly connected to micro-controller to display electricity information, if it is required to display current network information, the two programs of network processor and micro-controller have to communicate each other.

### SUMMARY OF THE INVENTION

In summary, the present invention is a new network type power distribution device. The present invention is a network type power distribution device comprised by a single layer, wherein micro-controller and software control power management and network communication.

The present invention is a micro-controller comprised by a single layer structure, wherein the function of software code is to control power management and network communication.

The objective of the present invention is to provide a network type power distribution device, wherein a micro-controller comprised by a single layer structure and the function of software code is to control power management and network communication. It is different from the conventional network type power distribution device that utilizes a two layers structure. The conventional network type power distribution device is comprised by two independent core programs which are network processing core comprised by network processor and electricity processing core comprised by micro-controller respectively.

The present invention is a single layer structure which directly uses a micro-controller to process network information and electricity information. Since there is only one micro-controller, one program and one set of program memory and one set of data memory, it does not need serial communication for internal communication.

Accordingly, for the present invention the hardware circuitry and structure are obviously different. Software is merely a program and obviously different, too. The present invention has the following advantages:

Conventional network type power distribution device structure has two layers communication which are network communication and serial communication to achieve the function of remotely controlling or managing each power output socket of power distribution device. Network communication bandwidth is generally several times faster than serial communication and results in network controller often waits for the electricity information of micro-controller to transmit via serial communication. It leads to a waste of network bandwidth and unbalance load of processing power. In fact it is caused by the different communication bandwidth and inconsistency in transformation between the two layers structure. The present invention merely has one layer and has no problem of waiting in transformation. Information is transmitted instantly without wasting network bandwidth.

The electricity information and network information of conventional network type power distribution device are processed by different programs and different processors. Display, sensor module, power module and relay module and micro-controller are connected directly and transmitted to network processor via serial communication and then to network. Because display is merely directly connected to micro-controller to display electricity information, if it is required to display current network information, the two programs of network processor and micro-controller have to communicate each other. Since the present invention is one program and one processor, display displays electricity information and network information concurrently and does not need serial communication to communicate internally. Instead, micro-controller displays IP address, network correction time, current, voltage, electricity watt and power information, etc via its program and its connected display.

In the present invention, the hardware circuitry eliminates a processor, a set of program memory, a set of data memory, inner serial communication wiring and the related hardware. And for the software there is only one. While the cost is diminished, the transmission of electricity update information per second is increased in network and the overall efficiency is enhanced.

### BRIEF DESCRIPTION OF DRAWINGS

FIG. 1 is a schematic block diagram of an embodiment of the conventional invention.

FIG. 2 is a schematic block diagram of an embodiment of the present invention.

FIG. 3 is a control module schematic diagram of an embodiment of the present invention.

FIG. 4 is a sensor module schematic diagram of an embodiment of the present invention.

FIG. 5 is a detective connection schematic diagram of an embodiment of the present invention.

FIG. 6 is a power sockets control schematic diagram of an embodiment of the present invention.

FIG. 7 is a power warning alarm and display and keyboard schematic diagram of an embodiment of the present invention.

FIG. 8 is a network interface schematic diagram of an embodiment of the present invention.

FIG. 9 is rack enclosure cabinet power distribution diagram illustrating the hardware structure of an embodiment of the present invention in a rack enclosure cabinet.

FIG. 10A, 10B are micro-controller module front top of the rack equipments cabinet or on the panel of power distribution cabinet

FIG. 11 is a micro-controller module diagram illustrating the micro-controller module implementation of the present invention.

FIG. 12 is a power module diagram illustrating the power module implementation of the present invention

FIG. 13 is an integration of micro-controller module and power module implementation diagram of an embodiment of the present invention.

FIG. 14 is a integration of power module and micro-controller and control module hardware implementation diagram of an embodiment of the present invention.

### DETAILED DESCRIPTION OF THE INVENTION

The other advantage, objective, technical feature and effectiveness of the present invention will be better understood by the detail description of preferred embodiment in conjunction with the following figure.

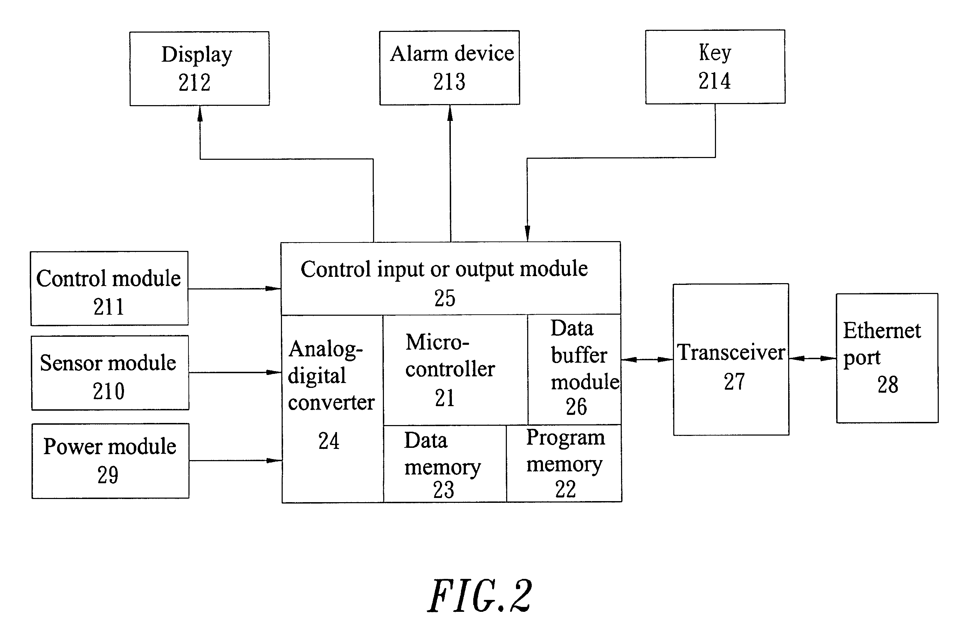

Referring to FIG. 2, FIG. 2 is an enlarged schematic diagram of an embodiment of the present invention. It is a network type power distribution device characterized in utilizing a micro-controller (21) to process the control of network type power distribution device. The network type power distribution device comprises a set of program memories (22), a set of data memories (23), a micro-controller (21), a data buffer zone (26), a control input/output module (25), an analog digital converter (24), a transceiver (27) and an Ethernet port (28).

Program memory (22) and data memory (23) provide micro-controller (21) and core program for operation. By means of Ethernet port (28) network data packets enters data buffer zone (26) via transceiver (27). The network data packets is analyzed directly by micro-controller (21) and the outcome is utilized directly by control input/output module (25) to control the said network type power distribution device. The analog digital converter signal is read and operated by micro-controller (21) and then connected directly to wire or wireless local area network or wide area network from data buffer zone (26) via transceiver (27).

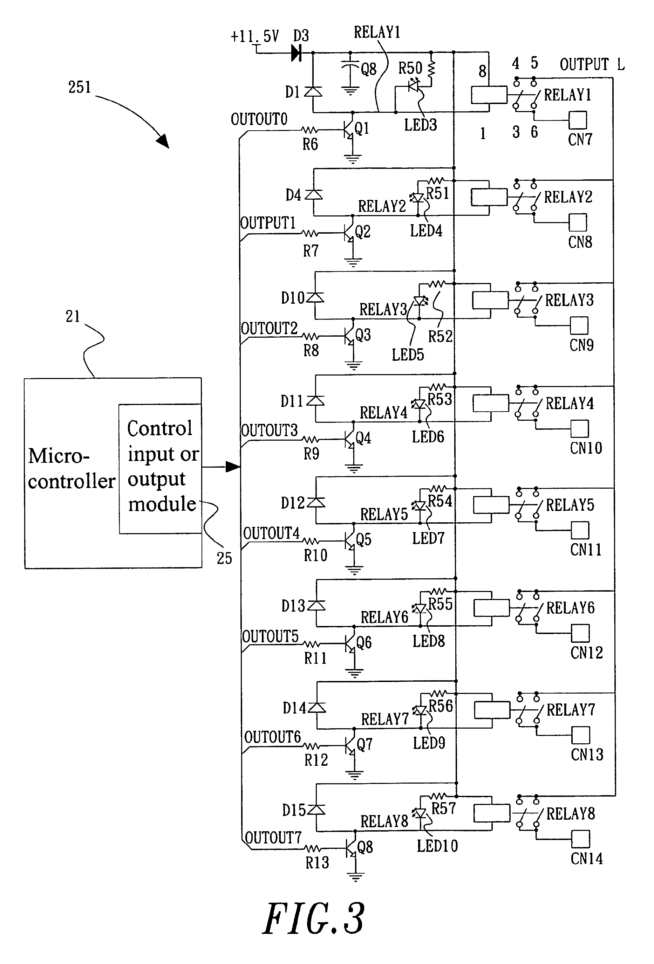

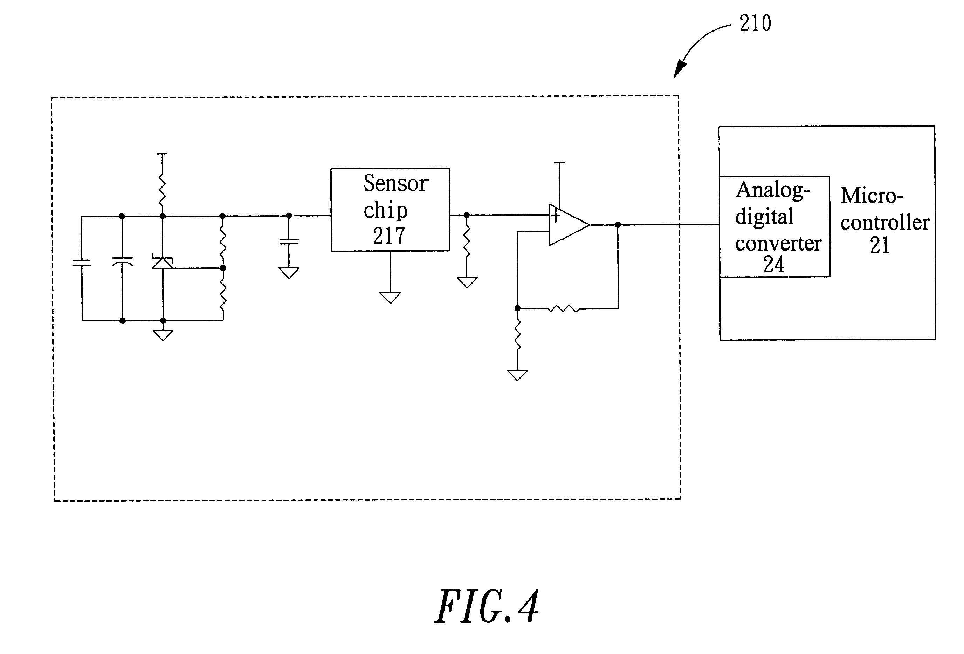

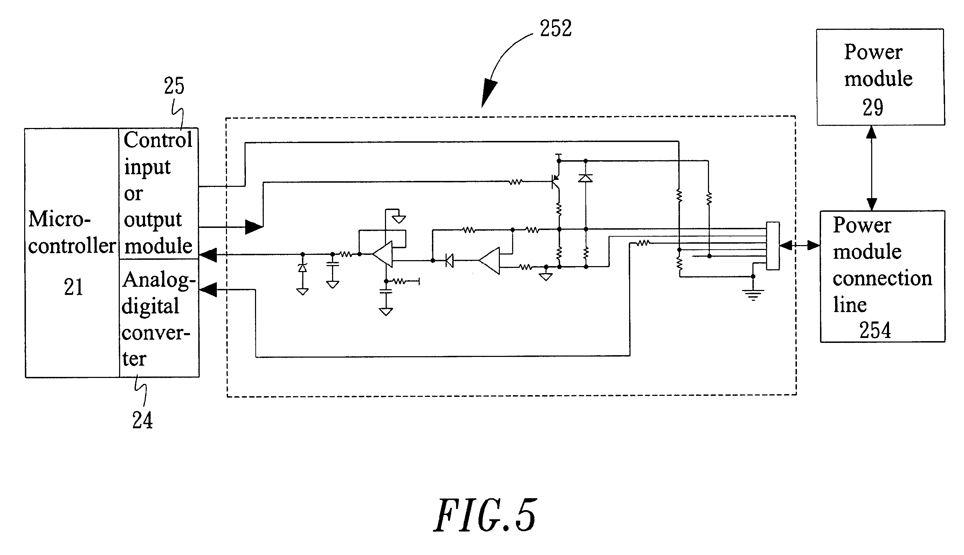

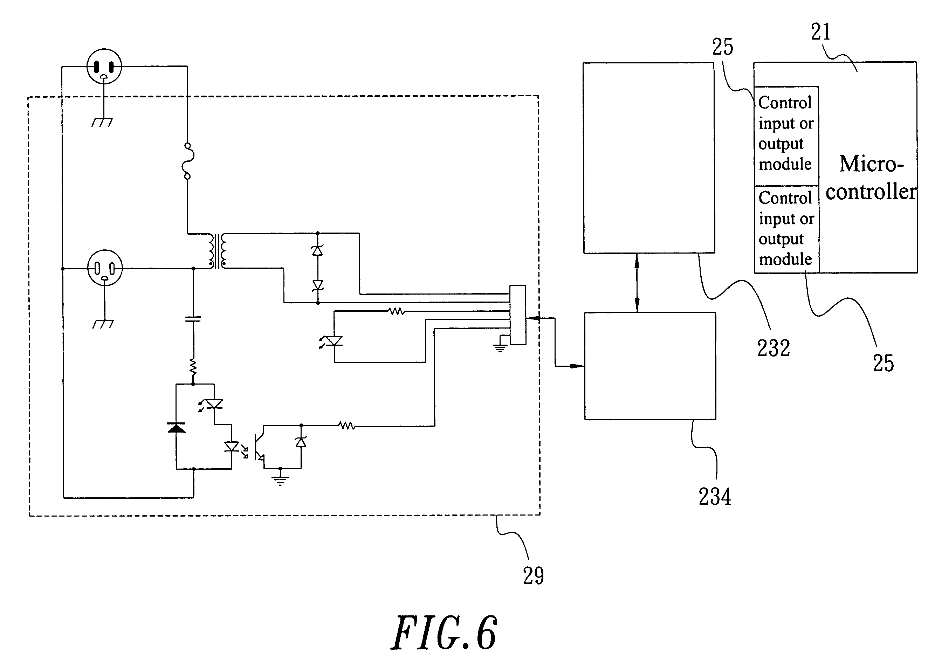

The present invention can be connected with a plurality of modules, as FIG. 3 of the embodiment is shown, directly controlled or read by micro-controller (21). For example control module (211) ca control or read exterior logic level state (DI/DO) or control relay module (251) as a method of controlling power output switch. As FIG. 4 of the embodiment is shown, in addition micro-controller (21) can read such as temperature, humidity etc signals by means of sensor chip (217) located in the interior of sensor module (210) or read output and input power current, voltage and frequency signals via power module (29). As FIG. 5 of the embodiment is shown, control input/output module (25) and analog-digital converter (24) are connected to detective connection circuit (252). The detective connection circuit (252) enables micro-controller to detect connectivity of signal connection line and detect whether the circuit breaker of power module is in the trip state or not. The analog signal of the electricity received by power module is converted into electronic signal via analog digital converter for micro-controller to calculate voltage, current or power. The detective connection circuit (252) connects to power module (29) after connecting power module signal connection line (254). The detective connection circuit (252) and micro-controller (21) can be installed in the same module or connected to control input/output module (25) and analog digital converter (24) by connection line. As FIG. 6 of the embodiment is shown, the power socket is installed inside for power distribution. The overall control requires only one micro-controller (21) to access power module data and send the power information to the network via wire or wireless local area network or wide area network. Also micro-controller (21) can process data from wire or wireless local area network or wide area network and control the power module following the commands received from network. Micro-controller (21) can switch of each power output socket of the said network type power distribution device via the commands received from network.

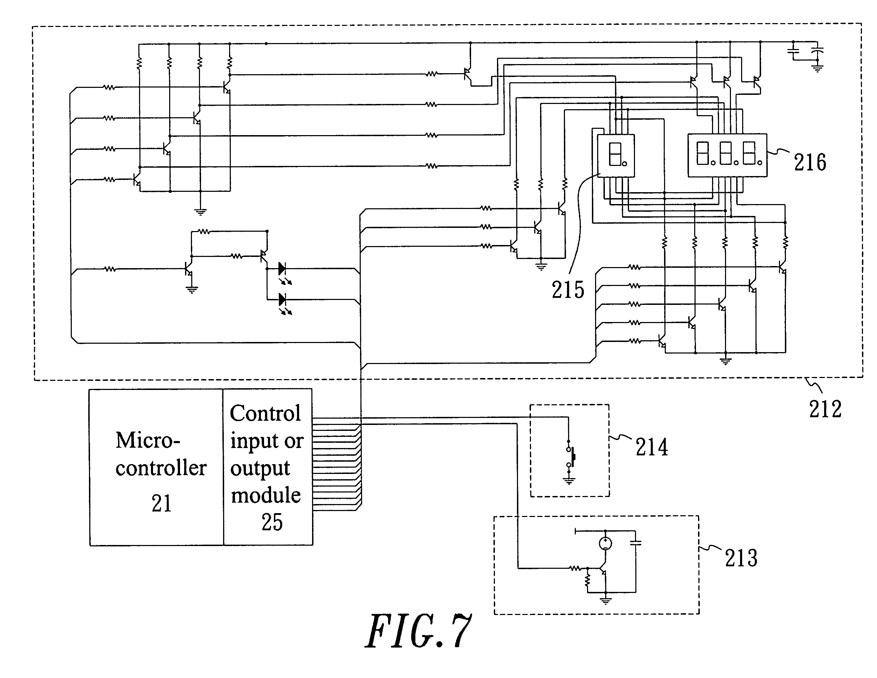

The present invention can be equipped with display (212) to display data of sensor module (210) and power module (211). The said display can display network information such as host machine IP, network correction time etc. As FIG. 7 of the embodiment is shown, four pieces of 7 segments display (215, 216) are used to display data of sensor module (210) and power module (211).

In addition, the network type power distribution device can be equipped with alarm device (213). As FIG. 7 of the embodiment is shown, when sensor module or power module reaches or exceeds the default range, it will send an alarm signal which it can be transmitted via wire or wireless local area network or wide area network to user.

As FIG. 7 of the embodiment is shown, the present invention can be equipped with keyboard (214). Keyboard can be used to select different function of the settings.

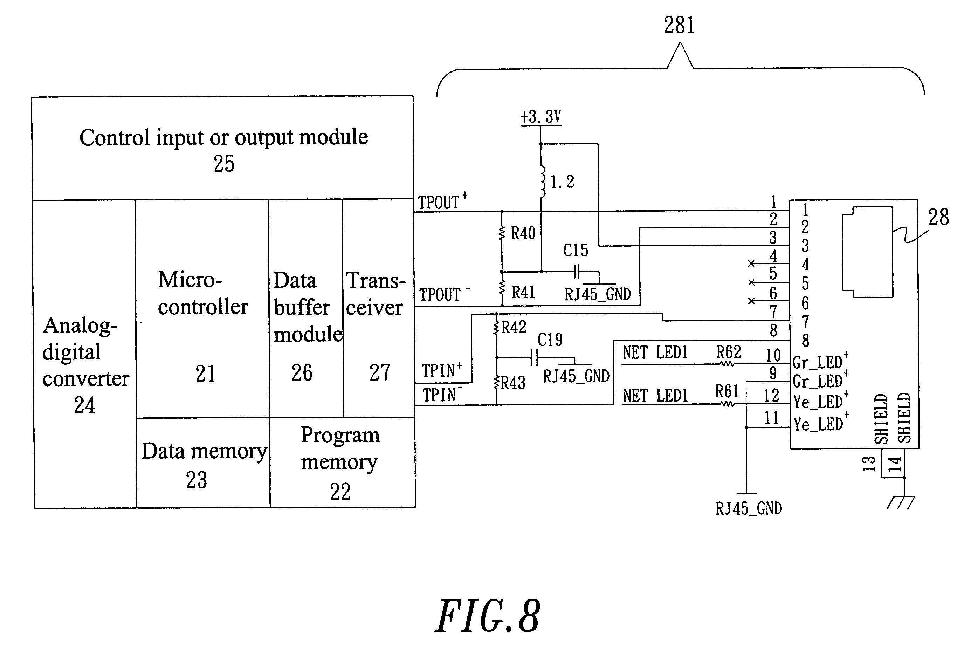

Transceiver (27) of the network type power distribution device can use bus cable to connect data buffer module to save the space of implementing the network type power distribution device. As FIG. 8 of the embodiment is shown, transceiver (27) can be integrated within the micro-controller (21) to implement a compact network type power distribution device

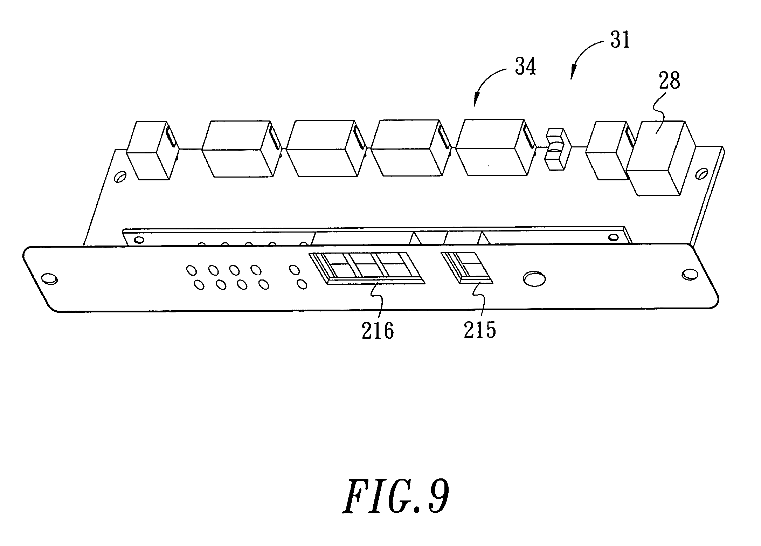

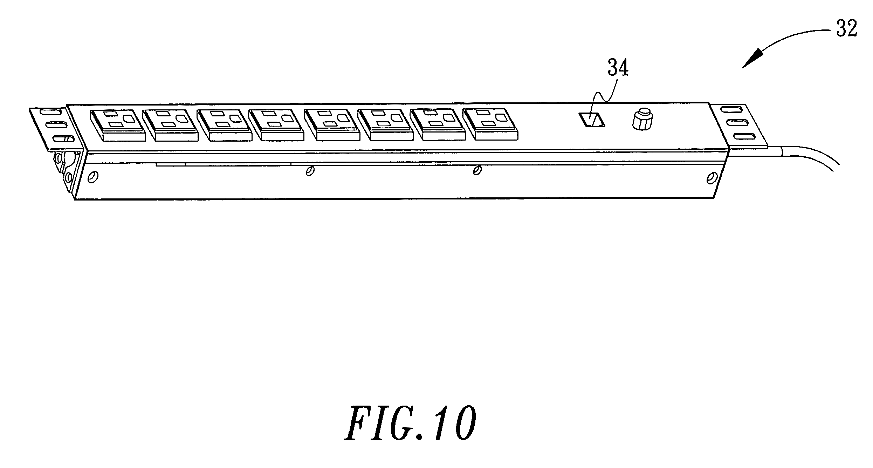

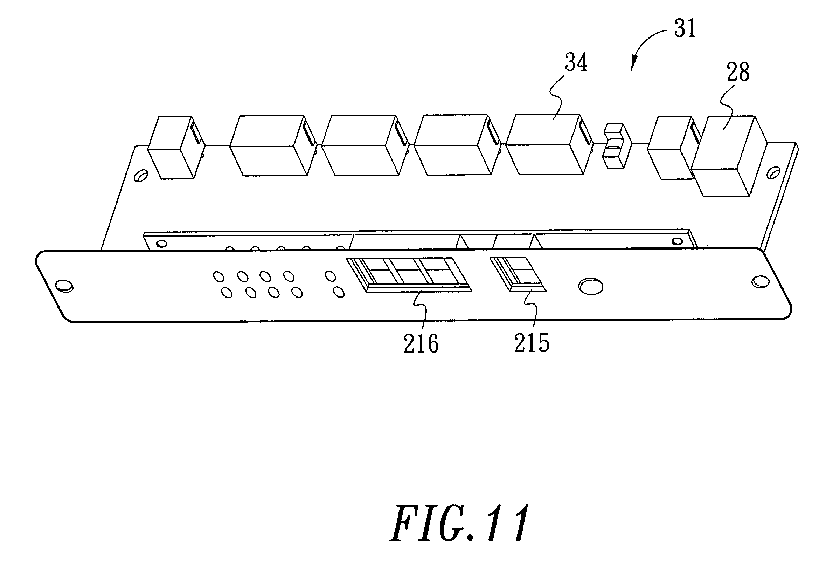

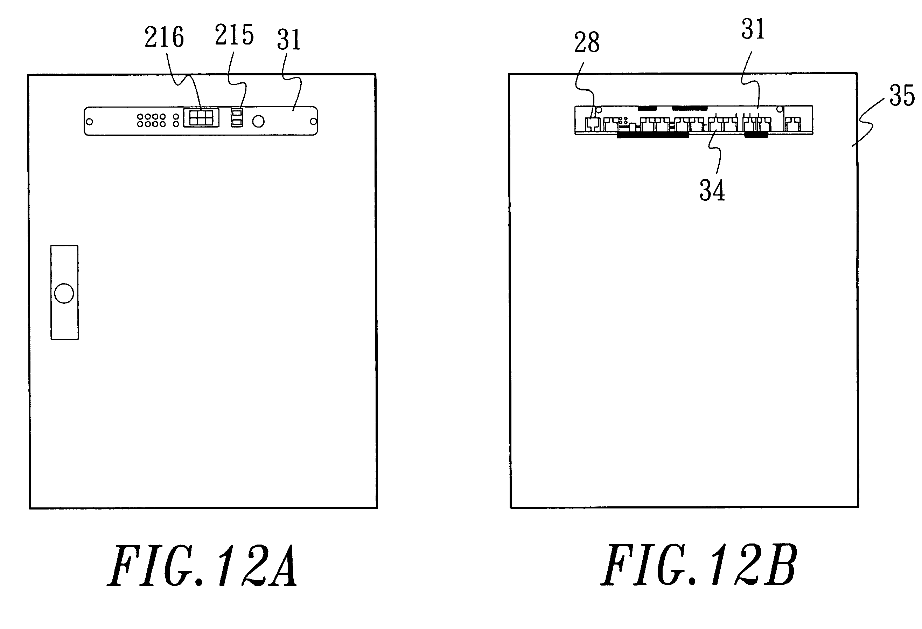

Referring to FIG. 9, FIG. 10A, 10B, the hardware structure of the present invention can be divided into two parts. One part is micro-controller block (31) and the other part is power circuit block (32). Both are connected by signal connection line to signal socket (34). Network data is connected by means of Ethernet port (28). Micro-controller block and power circuit block (32) are connected by isolated secondary side signal connection line and isolated secondary side power connection line and there is no dangerous primary side high voltage electricity connected between each other. FIG. 10A, 10B are two implementation forms. Micro-controller (31) is disposed at the front top of the rack equipments cabinet (36) or on the panel of power distribution cabinet (35). Power circuit block (32) is disposed at the rear of the rack equipments cabinet (36) or in the cabinet of power distribution panel (35). Micro-controller block (31) merely has safe low voltage electricity and has no dangerous high voltage electricity. When one block is damaged it merely replaces the damaged block without replacing the two blocks at the same time. Accordingly it is easier to configure and maintain the power distribution device. Micro-controller block (31) can be connected with power circuit block via detective connection circuit and detective analog signal connection line by means of analog-digital converter. It enables micro-controller to detect whether analog signal connection line is connected or disconnected and detect whether the circuit breaker of the power module is in the trip state or not. When micro-controller block (31) is faulty, it can be done by having the signal line (33) hot unplugged from signal socket (34) and having the secondary side electrical connection line hot unplugged from secondary side electricity socket, and then replacing micro-controller block (31). The signal connection line (33) and secondary side electrical connection line are connected to the good micro-controller block (31) referring to FIG. 11, without interrupting the power distribution of primary side high voltage power of the electrical circuit block (32) referring to FIG. 12. The exterior equipment connected to the power output socket of the network type power distribution device such as a server will not lost the power and could continue the operation during the hot swapping the micro-controller block. Furthermore, the hardware structure of the present invention can dispose the micro-controller block (31) alone at a visually better location to facilitate surveillance and maintenance for field technicians and power circuit block (32) is disposed at a safer location.

The power circuit block diagram of the present invention is not limited by one set of electricity output and input circuit. In the present invention power circuit block diagram can be equipped with plural sets of electricity output and input circuit (32, 321, 322, 323) and three-phase circuit.

The hardware structure of the present invention can detect disconnected state of signal line connection and the open state of fuse or circuit breaker of the output protection circuit in the power circuit block.

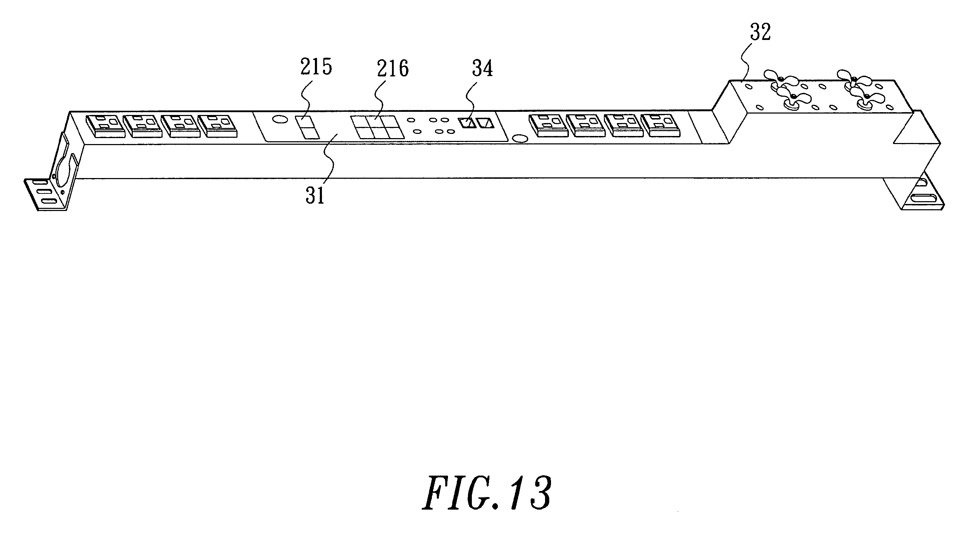

The hardware structure of the present invention can be assembled into an integral body. Referring to FIG. 13, one part is micro-controller block (31) and the other part is power circuit block (32). Both are connected by signal line and secondary side electricity line. Network data is connected by means of Ethernet port (28). The connection between Micro-controller block and power circuit block (32) uses only safe low voltage electricity and has no dangerous high voltage electricity. When one block is damaged it merely replaces the damaged block without replacing two blocks concurrently. Accordingly it achieves better hardware maintenance convenience. When micro-processor block (31) is out of order, it can be done by replacing microprocessor block (31) alone without interrupting the electricity distribution of power circuit block (32). The exterior connected equipment such as server will not have power disconnection and be forced to stop operation by the faulty microprocessor block or when the micro-controller block is removed for repair or maintenance.

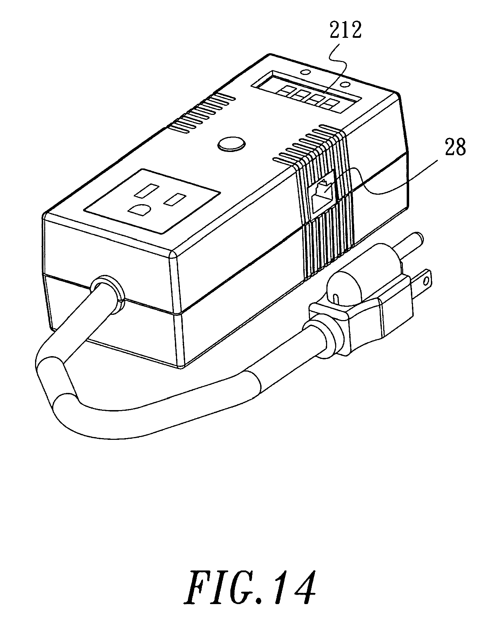

The hardware structure of the present invention can be assembled into an integral body. Referring to FIG. 14, it works as a network type power distribution device displaying network correction time, IP address, power information and controlling power output switch.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A network type power distribution device, utilizing a micro-controller to control the network type power distribution device, **characterized in**:
a set of program memory;
a set of data memory;
a micro-controller connecting with the set of program memory and the set of data memory respectively, wherein the set of program memory and the set of data memory provide the micro-controller required core program for operation;
a data buffer zone connecting with the micro-controller;
a control input/output module connecting with the micro-controller;
an analog-digital converter connecting with the micro-controller,
wherein the micro-controller directly analyzes network data and provides an outcome so the analog-digital converter and the control input/output module can be utilized to control the said network type power device directly; and
a transceiver connecting with the data buffer zone by utilizing bus and the network data is provided through the transceiver to the data buffer zone via an Ethernet port.

2. A network type power distribution device according to claim 1 further comprising a control module, wherein the said control input/output module connects and controls the control module.

3. A network type power distribution device according to claim 1 further comprising a sensor module, wherein the said control input/output module connects and controls the sensor module.

4. A network type power distribution device according to claim 1 further comprising a power module, wherein the said control input/output module connects and controls the power module.

5. A network type power distribution device according to claim 1 further comprising a display, wherein the said control input/output module connects and controls the display.

6. A network type power distribution device according to claim 1 further comprising an alarm device, wherein the said control input/output module connects and controls the alarm device.

7. A network type power distribution device according to claim 1, wherein the said control input or output module connects and controls the keyboard.

8. A network type power distribution device according to claim 1 further comprising a relay module, wherein the said control input/output module connects and controls the relay module.

9. A network type power distribution device according to claim 1 further comprising a sensor module, wherein the said analog-digital converter connects the sensor module.

10. A network type power distribution device according to claim 1 further comprising a power module, wherein the said analog digital converter connects the power module.

11. A network type power distribution device according to claim 1, wherein the said data buffer zone is directly integrated within the micro-controller.

12. A network type power distribution device according to claim 1, wherein the said control input/output module is directly integrated within the micro-controller.

13. A network type power distribution device according to claim 1, wherein the said analog-digital converter is directly integrated within the micro-controller.

14. A network type power distribution device according to claim 1, wherein the said transceiver is directly integrated within the micro-controller.

15. A network type power distribution device according to claim 1, wherein the said analog-digital converter is connected with a power module via a detective connection circuit and an analog signal connection line so the micro-controller can detect whether the analog signal connection line is connected or disconnected and can detect whether a circuit breaker of the power module is in a trip state.

16. A network type power distribution device according to claim 15, wherein the said power module is equipped with plural sets of electricity output and input circuit or a three-phase circuit.
